# EUROPEAN PATENT APPLICATION

(11) **EP 1 826 258 A1**
(43) Date of publication of application: **29.08.2007**
(21) Application number: 05744865.6
(22) Date of filing: 04.05.2005
(51) Int. Cl.: C09K 5/04

(54) **IMPROVEMENT TO MIXTURE OF REFRIGERANT GASES BASED ON HYDROCARBONS IN ORDER TO OBTAIN GREATER EFFICIENCY IN AIR CONDITIONING AND REFRIGERATION COMPRESSION SYSTEMS**

(30) Priority: 20.10.2004 MX PA04010342
(71) Applicant: Ochoa Vivanco, Ruben Dario, Mexico, D.F. 09480 (MX)
(72) Inventor: Ochoa Vivanco, Ruben Dario, Mexico, D.F. 09480 (MX)
(74) Representative: Grünecker, Kinkeldey, Stockmair & Schwanhäusser Anwaltssozietät
(86) International application number: PCT/MX2005/000034
(87) International publication number: WO 2006/043801

(57) **Abstract**

The invention relates to the mixture of natural gases based on hydrocarbons (HC) which do not damage the ozone layer and which have an insignificant greenhouse effect, said gases being substitutes for CFC gases R-12 and R-22, whereby the R-12 substitute is known as HC-12 and the R-22 substitute is known as HC-22. The aforementioned mixtures, which generate a specific pressure/temperature curve, improve the efficiency of air conditioning and refrigeration compression systems. Specifically, since condensation pressures are lower, less pressure and, consequently, less work is required from the compressor, and hence power consumption is reduced. In addition, the refrigerant gases, based on HC mixtures, replace CFCs and HCFCs and are compatible with materials and elements used in commercial refrigeration and air conditioning systems. The resulting mixture generates a specific pressure/temperature curve with a range of plus or minus 5 %. Said refrigerant gases, based on HC mixtures, replace alternative refrigerants comprising mixtures containing large amounts of HFCs (hydrofluorocarbons) and are compatible with materials and elements used in commercial refrigeration and air conditioning systems.

## Description

### Background of the invention

Since the signing of the Montreal Protocol, several alternative refrigerant gases have been developed to substitute CFC's: the European Union has developed the use of hydrocarbons as alternative refrigerant gases; R290 was used to substitute R-22, a mixture of R290 and R600a to substitute R-12.

The use of this technology in the European Union has been from the beginning an ecological alternative since it causes "ZERO" damage to the OZONE layer and practically "ZERO" greenhouse effect.

The leading company in this technology is Calor Gas from England, and they offer as a refrigerant to substitute R-22 a mixture of Propane and ethane called CARE 50 and, according to their report, it is slightly superior than R-22 in energy consumption; in the case of the substitute refrigerant for R-12, they offer a mixture of Propane and isobutene called CARE 30 in this case reporting a 6% of energy saving.

This technological breakthrough is astonishing in itself due to the ecological benefits that it entails, especially if we compare them to the poor ecology advances of the technological developments of the chemical industries, whose commercial offerings of substitute alternative refrigerant gases of CFC's, like the R134a, have been very criticized by the European Union, because they still affect the Ozone Layer and because of their high effect in global warming, reasons why the use of these refrigerant gases have been selected to end by the Kyoto Protocol.

When it comes to Hydrocarbons, the European Union and other countries that have extensively applied this technology have developed international security regulations for the safe use of the same.

In order to make the use of this gas family more attractive, several experiments with different mixtures of gases from the same family were carried out to try to improve their performance in a compression system.

This technological development work is what is sought to be protected by means of the present application, since it is a mixture of Hydrocarbons, that when applied to compression systems improve their performance, increasing their cooling capacity with the same supplied energy.

### Description of the Invention

Based on the fundamentals of the European Union for the use of non-polluting natural gases, the task of improving this technology and offering a true alternative that would be attractive from the economic point of view and not only from the ecologic one was undertaken.

Considering that Mexico is an oil country and producer of hydrocarbons, an investigation on the different suppliers for these gases was conducted, a great number of tests were performed to use it as base and add the appropriate components to obtain a mixture with characteristics of impact, which provided considerable energy savings. The result was a mixture of HC (Hydrocarbons) gases whose characteristics of the "Pressure" and "Temperature" curves would exceed in their functioning the refrigeration systems in their energy consumption of reference gases R-22 and R-12 and the gases proposed by the European Union.

The new mixture has a balance between its volumetric capacity, its cooling effect and the condensation pressure which produces a higher cooling per mass unit and the condensation pressure is decreased in an important way which results in a smaller amount of energy required to obtain the same amounts of cooling.

The use of these mixtures is completely compatible with the lubricants that are used in current commercial compressors, making their application direct, drying the existing gas in such a way that it does not reach the atmosphere and the new mixture of gases is applied and better energetic performance is obtained.

What was achieved with these mixtures of gases is that their physical characteristics allow having the same volumetric capacity in a lower compression pressure, this due to the characteristics of the different gases that form the mixture.

Components of the mixtures:

**For the R-22 substitute**

| HC-22 has been randomly assigned, this connotation has no relation to its chemical composition. | |
|---|---|
| Gases Present | Temperature of evaporation |
| Propane between | -42.5°C |
| 1-Propane between | -47.7°C |
| Isobutane between | -11.73°C |
| Butane between | -0.5 |
| 2-Butene Butane, 1-Butene cyclobutane in smaller amounts | |

**For the R-12 substitute**

| HC-12 has been randomly assigned, this connotation has no relation to its chemical composition. | |
|---|---|
| Gases Present | Temperature of evaporation |
| Isobutane between | -11.73°C |
| Propane between | -42,7°C |
| Butane between | -0.5°C |
| 1-Butene, 2-Butene, Cyclobutane in smaller amounts. | |

The most important characteristic of these mixtures is that they obey a pressure temperature curve with a more less 5% precision.

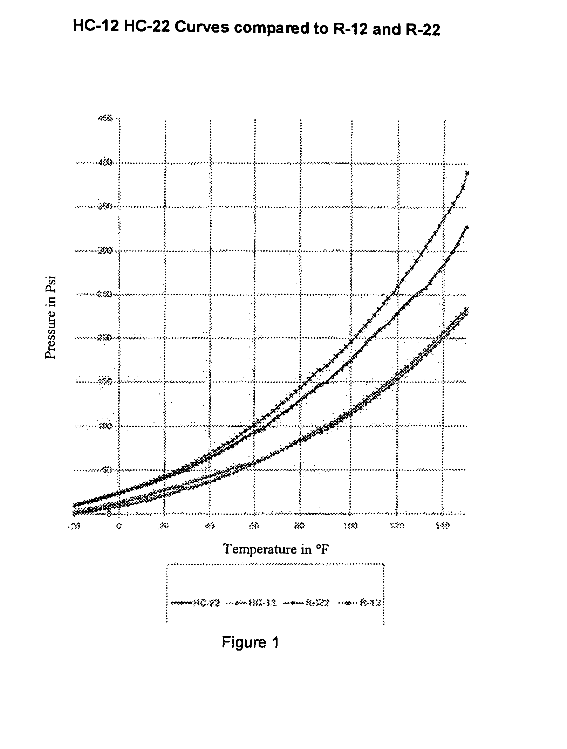

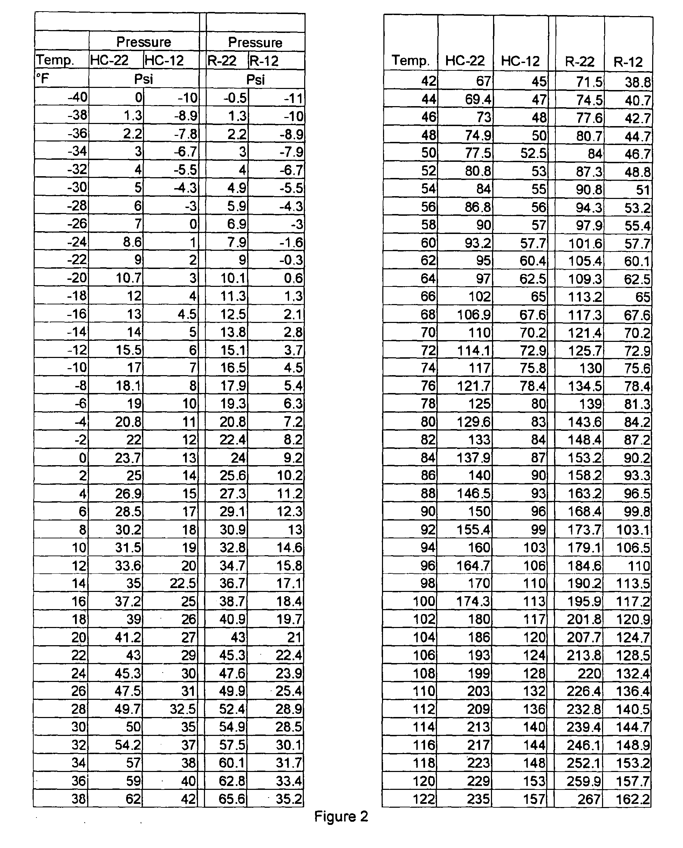

Figure 1 shows the behavior curve of HC-12 and HC-22 mixtures compared with R-12 and R-22 refrigerants_ Figure 2 shows the values that originated the curves in figure 1.

Having sufficiently described my invention, I consider it novel and therefore claim as my exclusive property what is contained in the following clauses:

## Claims

1. A mixture of gases with a Hydrocarbon base (HC-22) that has as behavior characteristic an improvement in the energetic performance of the compression system of the air conditioning and refrigeration systems as has been previously described, and that substitutes the HCFC R-22.

2. A mixture of gases with a Hydrocarbon HC-12 base that has as behavior characteristic an improvement in the energetic performance of the compression system of the air conditioning and refrigeration systems as has been previously described, and that substitutes the CFC R-12.

3. A mixture of gases with a Hydrocarbon HC-12 base that has as behavior characteristic an improvement in the energetic performance of the compression system of the air conditioning and refrigeration systems as has been previously described, and that substitutes the HFC R-134a.

4. A mixture of gases with a hydrocarbon HC-12 and HC-22 base, used as refrigerants in commercial air conditioning and refrigeration that do not damage the ozone layer.

5. A mixture of gases with a hydrocarbon HC-12 and HC-22 base, used as refrigerants in commercial air conditioning and refrigeration with a negligible greenhouse effect.

6. A mixture of gases with a hydrocarbon HC-12 and HC-22 base, used as refrigerants in commercial air conditioning and refrigeration as an ecological solution, to substitute CFC R-12 and HCFC R-22 gases when an equipment is being serviced and requires to be filled with refrigerant, since it is compatible with mineral oil based lubricant, used in the current refrigeration systems.

7. Ecological refrigerants with a hydrocarbon HC-12 and HC-22 base, used as refrigerants in commercial air conditioning and refrigeration as elements of technological independence.

8. Refrigerant with a hydrocarbon HC-12 base that can be used as substitute for the new chemical gases with a Fluorine base, HFC-134a hydrofluorocarbonated, which elimination must be programmed according to the Kyoto Protocol. Being these gases compatible with the polyolester lubricant used by the domestic and commercial low-capacity refrigeration equipments that use these refrigerants, it is only required to extract the chemical refrigerant and apply this new HC-12 refrigerant.

9. Refrigerant gases with a Hydrocarbon HC-12 and HC-22 base with base components (hydrocarbons) predominantly Mexican that obey the pressure temperature curve that when applied to refrigeration and air conditioning equipments with compression system improve their behavior, improving their energetic efficiency.

10. Refrigerant with a Hydrocarbon HC-22 base that can be used as substitute of the new alternative chemical refrigerant gases that present in their "Mixtures", a Fluorine base, HFC-134a hydrofluorocarbonated, used mainly in commercial air conditioning and refrigeration equipments, which elimination must be programmed according to the Kyoto Protocol. Being these HC-22 gases compatible with the polyolester lubricant used by the equipments that use these refrigerants, it is only required to extract the chemical refrigerant to be substituted and apply this new HC-22 refrigerant.
